# EUROPÄISCHE PATENTSCHRIFT

(11) **EP 3 580 051 B1**
(45) Veröffentlichungstag und Bekanntmachung des Hinweises auf die Patenterteilung: **31.03.2021**
(21) Anmeldenummer: 18703571.2
(22) Anmeldetag: 05.02.2018
(51) Int. Cl.: B29C 70/86, B29C 70/54, B29C 70/34, B61D 17/00

(54) **VERFAHREN ZUR VERBINDUNG EINES VERBINDUNGSSTÜCKES MIT EINEM U-FÖRMIGEN RINGANKER FÜR EIN KOPFMODUL FÜR SCHIENENFAHRZEUGE**
METHOD FOR CONNECTING A CONNECTION PIECE TO A U-SHAPED RING ANCHOR FOR A HEAD MODULE FOR RAIL VEHICLES
PROCÉDÉ D'ASSEMBLAGE D'UNE PIÈCE D'ASSEMBLAGE À UNE ARMATURE EN ANNEAU EN U POUR UN MODULE DE TÊTE D'UN VÉHICULE FERROVIAIRE

(30) Priorität: 09.02.2017 DE 102017102566
(43) Veröffentlichungstag der Anmeldung: 18.12.2019
(73) Patentinhaber: CRRC Qingdao Sifang Co., Ltd., Qingdao, Shandong 26611 (CN); CG Rail - Chinesisch-Deutsches Forschungs - Und Entwicklungszentrum Für Bahn - Und Verkehrstechnik Dresden GmbH, 01067 Dresden (DE)
(72) Erfinder: DU, Jian, Qingdao Shandong 266111 (CN); LIN, Peng, Qingdao Shandong 266111 (CN); CHEN, Dongfang, Qingdao Shandong 266111 (CN); ZHANG, Zhengmin, Qingdao Shandong 266111 (CN); ZHANG, Yonggui, Qingdao Shandong 266111 (CN); CAO, Chunpeng, Qingdao Shandong 266111 (CN); HUFENBACH, Werner, 01324 Dresden (DE); ULBRICHT, Andreas, 01324 Dresden (DE)
(74) Vertreter: Prinz & Partner mbB
(86) Internationale Anmeldenummer: PCT/EP2018/052772
(87) Internationale Veröffentlichungsnummer: WO 2018/146040

(56) Entgegenhaltungen:
- WO-A1-2010/029188
- DE-A1- 19 725 905
- FR-A1- 2 834 926

## Beschreibung

Gegenstand der vorliegenden Erfindung ist ein Verfahren, mit dem ein Verbindungsstück mit einer speziellen Ringankerstruktur aus Faserverbundwerkstoff für die Anbindung an ein nachfolgendes Wagenteil mit dem Ringanker verbunden werden kann. Der Ringanker ist Teil der Konstruktion eines Kopfmoduls für ein Schienenfahrzeug und soll im Crash-Fall dazu beitragen, die auftretenden Lasten abzubauen und zu verteilen.

Insbesondere handelt es sich bei dem Kopfmodul um eine Konstruktion für Nahverkehrszüge, insbesondere U-Bahnen. Bei derartigen Zügen ist das Kopfmodul häufig in den Wagen integriert. Das Kopfmodul wird im Weiteren auch als Kabine bezeichnet.

Im Interesse der Material- und Energieeffizienz hat sich in den letzten Jahren der Einsatz leichter Materialien und der Prinzipien des Leichtbaus im Schienenfahrzeugbau immer weiter durchgesetzt. Insbesondere die Verwendung von Faserverbundmaterialien nimmt immer mehr zu. Auch für die Gestaltung der Kopfmodule von Schienenfahrzeugen trifft dies zu.

Bekannte Konstruktionen sehen hier vor, vorgefertigte Module auf die Unterkonstruktion, die den gesamten Wagen ohne Unterbrechung durchzieht, aufzusetzen.

So ist Gegenstand der DE 197 25 905 ein Verbindungsverfahren eines vorgefertigten Kopfmoduls aus faserverstärktem Kunststoff (FKV) mit dem Untergestell und dem Wagenkastenmodul. Die Seitenwände des Kopfmoduls sind vorzugsweise als Sandwichsstruktur aus FKV mit einem zwischenliegenden Kernmaterial gefertigt. Zum Einsatz kommen hier spezielle Verstärkungsprofile in den Fügebereichen des Kopfmoduls, die die Kraftübertragung zwischen Untergestell bzw. Wagenmodul und den FKV-Wänden des Kopfmoduls verbessern. Eine spezielle Gestaltung der Faserführung der FKV-Verstärkung ist nicht vorgesehen. Die Verstärkungsprofile sind in den Kern der FKV-Wände des Kopfmoduls integriert und wirken als Widerlager für die Bolzenverbindung zwischen FKV-Wänden des Kopfmoduls und Untergestell bzw. Wagenkastenmodul. Nachteilig ist hierbei, dass das Verstärkungsfasermaterial zwischen dem Verstärkungsprofil und dem Untergestell einer Druckbelastung ausgesetzt ist und so die Gefahr einer kriechbedingten Schädigung des FKV-Materials in diesem Bereich besteht.

In der DE 10 2014 204 761 A1 wird das Problem der Crashsicherheit, insbesondere der Frontscheibe, bei den Schienenfahrzeugköpfen behandelt. Es ist vorgesehen, dass der Rahmen der Frontscheibe ein Verformungselement aufweist, das Energie aufnehmen und durch seine Verformung abbauen kann. Dabei soll sich die Frontscheibe möglichst ohne Entstehung von Bruchstücken aus dem Rahmen bewegen. Realisiert wird dies in der DE 10 2014 204 761 A1 indem Sollbruchstellen im Rahmen der Frontscheibe oder in dessen Nähe vorgesehen sind. Die Sollbruchstellen werden durch die geometrische Ausführung, die Dimensionierung des Verformungselementes oder dessen Material erzeugt. Das Verformungselement soll in einer Ausführungsform teilweise oder vollständig um die Frontscheibe herum verlaufen. Der Rahmen kann auch von der Fahrzeughülle selbst gebildet werden.

Gegenstand der WO 2015/011193 A1 ist eine Energieverzehrvorrichtung für Schienenfahrzeuge. Zweck dieser Vorrichtung ist es, im Crash-Falle einen Teil der Stoßenergie aufzunehmen und in Materialverformung umzuwandeln. Dazu wird ein dreidimensional geformter Körper aus FKV genutzt. Dieser weist Schichten mit unidirektional ausgerichteten Fasern und Schichten mit ungerichtet (Wirrfasern) angeordneten Fasern auf. Der Energieverzehr wird insbesondere dadurch realisiert, dass ein Gegenelement in Längsrichtung auf das Energieverzehrelement trifft und dabei die Lage bzw. die Lagen mit Wirrfasern zerstört, insbesondere zerfasert. Die Anordnung der Fasern ohne Vorzugsrichtung gewährleistet dabei, dass die Stoßenergie beim Bruch der Fasern umgesetzt wird und nicht zu einer Delaminierung verschiedener Faserschichten führt.

In der WO 2010/029188 A1 wird ein selbstragender Fahrzeugkopf offenbart, der vorrangig aus Faserverbundmaterial aufgebaut ist. Der Fahrzeugkopf weist Strukturelemente auf, die dem Energieverzehr im Crashfalle dienen sowie sonstige Strukturelemente, die keine spezielle Funktion zum Energieabbau haben. Insbesondere sollen auch die energieverzehrenden Strukturelemente aus Faserverbundwerkstoff bestehen. Weiterhin ist vorgesehen, dass eine Reihe von energieabbauenden Strukturelementen nacheinander zum Energieverzehr beiträgt bzw. entsprechende Kräfte überträgt. Der Fahrzeugkopf weist eine Mittelpufferkupplung auf, die bauartbedingt vor der Front der Verkleidung des Fahrzeugkopfes liegt. Daher ist der Mittelpufferkupplung unmittelbar ein Energieverzehrelement nachgeordnet, das auf die Kupplung ausgeübte Stöße absorbieren soll. Darüber hinaus sind parallel dazu zwei seitliche Energieverzehrelemente angeordnet, die als Aufkletterschutz wirken sollen. Des Weiteren weist die Brüstung unterhalb des Frontfensters mindestens ein, bevorzugt zwei Energieverzehrelemente auf. Von der Brüstung führen auf jeder Seite des Kopfteils zwei Stränge zur Energieübertragung in die Unterkonstruktion des Wagenteils. Darüber hinaus sind den beiden A-Säulen in Bewegungsrichtung zwei Energieverzehrelemente vorgelagert. Die A-Säulen sind dazu ausgestaltet, Bewegungsenergie in die Dachstruktur zu leiten und eventuell noch verbliebene Stoßenergie im Crash-Fall kontrolliert abzubauen. Dies ist notwendig, da konventionelle Wagenteilkonstruktionen keine im Dachbereich angeordneten Längsträger aufweisen, die Teile der Stoßenergie aufnehmen könnten. Nachteilig ist hierbei, dass eine auf die Brüstung ausgeübte Kraft in Verbindung mit den zwei seitlichen Strängen zur Energieübertragung zu einer Hebelwirkung auf die Dachkonstruktion führen kann, die diese in eine Bewegung, im Wesentlichen senkrecht zur Bewegungsrichtung des Fahrzeugs, versetzt. Dies kann die Fähigkeit der Dachkonstruktion, verbliebene Stoßenergie aufzunehmen, zumindest reduzieren. Es liegt somit eine nachteilige Kopplung von Sicherheitssystemen vor. Die Dachstruktur ist als Sandwichbauteil ausgeführt. Spezielle Verstärkungen oder Kraftleitungselemente sind nicht vorgesehen.

Die genannten Lösungen sind für Züge geeignet, die einer Vielzahl unterschiedlicher Kollisionsgegner ausgesetzt sein können. Dementsprechend komplex sind die angewandten Lösungen.

Eine geeignete Konstruktion für einen Fahrzeugkopf (Kopfmodul), insbesondere für U-Bahnen und ähnliche Anwendungen, die auf getrennten Streckennetzen operieren und im Wesentlichen nur gleichartig aufgebauten Kollisionsgegnern ausgesetzt sein können, weist keine durchgehende Unterkonstruktion, die vom Wagenteil in das Kopfmodul reicht, auf.

Insbesondere muss das Kopfmodul geeignet sein, den entsprechenden Wagenteilen voran gestellt werden zu können. Dazu sind die konstruktiven Merkmale dieser Wagenteile zu berücksichtigen.

Im vorliegenden Fall ist das Kopfmodul an ein Wagenteil zu montieren, das sich durch entsprechende Schnittstellenbauteile auszeichnet. Dies sind insbesondere:
- zwei Längsträger des Untergestells, die sich an den Unterkanten des Wagenteils in Längsrichtung erstrecken und deren Stirnflächen zur Montage des Kopfmoduls geeignet sind,
- eine Untergestellstütze zur Fahrerkabine, die zwischen den beiden Längsträgern des Untergestells verläuft und in den Hauptquerträger mündet, der in dem Drehgestell des Wagenteils lagert. Der Hauptquerträger ist in den beiden Längsträgern des Untergestells widergelagert. Die Untergestellstütze zur Fahrerkabine und der Hauptquerträger sind vorzugsweise aus Stahl gefertigt.
- zwei Längsträger des Wagendaches, die sich an den Oberkanten des Wagenteils in Längsrichtung erstrecken und deren Stirnflächen zur Montage des Kopfmoduls geeignet sind.

Die Längsträger sind vorzugsweise aus Faserverbundwerkstoff gefertigt. Alle Schnittstellenbauteile weisen entsprechende Befestigungsmöglichkeiten für die korrespondierenden Bauteile der Kabine auf. Bevorzugt sind dies lösbare Befestigungen, ganz besonders bevorzugt Schraubverbindungen.

Das Kopfmodulweist drei Systeme auf, die im Crash-Falle die Stoßenergie in Verformung umwandeln. Diese Systeme sind weitgehend unabhängig voneinander aufgebaut und können so vorteilhaft nacheinander oder zeitgleich wirken, ohne dass die Crash-bedingte Zerstörung eines Systems das andere in seiner Wirksamkeit beeinträchtigen könnte Die Systeme sind im Wesentlichen aus Faserverbundmaterial gefertigt.

Bei den drei Systemen handelt es sich um:
1. eine als Ringanker ausgeführte Versteifung im Dachbereich der Kabine, die Kräfte in die oberen Längsträger des nachfolgenden Wagenteils leitet,
2. eine Brüstungsverstärkung, die über seitlich der Kabine verlaufende UD-Gurte Stoßkräfte in die unteren Längsträger des nachfolgenden Wagenteils leitet,
3. ein unteres Crash-Durchleitungselement, das mit einer Crash-Box ausgestattet ist und darüber hinaus die verbliebene Stoßenergie in die Untergestellstütze leitet.

Die drei Crash-Systeme leiten somit die verbliebenen Stoßkräfte in unterschiedliche Bauteile des nachfolgenden Wagenteils ein.

Die Fahrerkabine ist vorzugsweise als zweischalige Konstruktion ausgebildet, die überwiegend, zu mindestens 50%, bevorzugt zu mindestens 75% und ganz besonders bevorzugt zu mindestens 85% ihrer Masse (ohne Berücksichtigung der Einbauten wie Schränken, Sitzen und Installationen, wie Beleuchtung, Verkabelungen etc.) aus Faserverbundwerkstoff besteht. Die äußere Schale ist mit den drei Systemen, die im Crash-Falle die Stoßenergie in irreversible Verformung umwandeln, verbunden. Die innere Schale kleidet den eigentlichen, von Passagieren nutzbaren, Innenraum aus. Beide Schalen sind als Faserverbundstrukturen ausgebildet, die keine wesentlichen Beiträge zur Crash-Resistenz liefern. Die äußere Schale gewährleistet die notwendige Steifigkeit der Konstruktion, indemsie als mehrlagige Faserverbundstruktur, optional mit zwischen den Faserschichten liegenden Kernen, realisiert ist. In den Faserschichten können gelegte, gewickelte oder geflochtene Fasergebilde eingesetzt werden. Zur Verbesserung der Steifigkeit sind auch UD-Faserstränge (unidirektionale Faserstränge) möglich. Vorteilhaft ist, dass die A-Säulen der äußeren Kabine keine speziellen Verstärkungen für die Kraftübertragung im Crash-Falle aufweisen. Dies verhindert, dass im Crash-Fall eine nachteilige Kraftübertragung auf den Ringanker erfolgt bzw. diese zumindest begrenzt wird. Bevorzugt sind die A-Säulen der äußeren Kabine zur Durchführung elektrischer Leitungen ausgestaltet. Die äußere Kabinenschale wird vorzugsweise aus Fasergelegen aufgebaut, die anschließend mit einem Matrixwerkstoff getränkt und konsolidiert werden. Auch der Aufbau aus bereits mit Matrixwerkstoff getränkten Fasergelegen ist möglich. Eine Verbindung der äußeren mit der inneren Schale erfolgt bevorzugt im Bereich der Front- und Seitenscheiben. Hier sind die beiden Schalen miteinander verschraubt, verklebt oder in sonstiger Weise verbunden. Die Frontscheibe ist vorzugsweise in der äußeren Schale eingeklebt. Vorzugsweise sind Sollbruchstellen vorgesehen, die gewährleisten, dass die Frontscheibe im Crash-Falle sich aus dem Rahmen löst und keine bzw. nur wenige Bruchstücke in den Innenraum gelangen. In einer weiteren bevorzugten Ausführungsform weist die Frontscheibe einen eigenen Rahmen auf, mit dem sie in der äußeren Schale befestigt ist. Auch hier sind Sollbruchstellen bevorzugt.

Eine besondere Bedeutung kommt dem Ringanker zu. Der Ringanker weist eine U-Form auf, bei der die beiden Enden des Ringankers an den oberen Längsträgern des nachfolgenden Wagenteils befestigt sind. Die Stirnfläche des Ringankers (entspricht der unteren Krümmung der U-Form) ist an der Innenseite der oberen Stirnseite der äußeren Kabinenschale angeordnet. Der Ringanker ist bevorzugt als Faserverbundbauteil ausgeführt. Dabei werden für den Ringanker UD-Faserlagen, die über die gesamte Länge des Ringankers, von einem Befestigungspunkt an einem oberen Längsträger des nachfolgenden Wagenteils zum anderen Befestigungspunkt an dem anderen oberen Längsträger des nachfolgenden Wagenteils verlaufen, genutzt. Diese UD-Faserlagen können alternierend mit Faserlagen eingesetzt werden, die abweichende Faserorientierungen aufweisen können. Bevorzugt sind Faserlagen aus Geweben. Insbesondere werden Faserlagen mit abweichenden Orientierungen bzw. Gewebe oder Geflechte genutzt, um die UD-Fasern vor dem Konsolidieren in ihrer Lage zu fixieren. Insbesondere werden bevorzugt kohlenstofffaserverstärkte Verbundmaterialien genutzt.

Die Verbindung der Enden des Ringankers zu den oberen Längsträgern des nachfolgenden Wagenteils wird bevorzugt durch Verbindungsstücke realisiert. Diese Verbindungsstücke unterstützen die Verbindung mit oberen Längsträgern des nachfolgenden Wagenteils, indem sie bei hinreichender Festigkeit die notwendigen Öffnungen für die Montage (bevorzugt Verschraubung) zur Verfügung stellen. Bei diesen Öffnungen handelt es sich insbesondere um ein Schraubenöffnung bzw. mehrere Schraubenöffnungen je Ringankerende zu korrespondierenden Öffnungen in den oberen Längsträgern des nachfolgenden Wagenteils. Darüber hinaus sind optional Öffnungen vorgesehen, durch die Verbindungsbolzen bzw. Muttern, Schrauben oder Ähnliches in die Öffnungen eingeführt und ggf. bei Verschraubungen gegengehalten werden können.

Die Verbindungstücke müssen somit sowohl im Normalbetrieb als auch im Crash-Falle große Kräfte übertragen können.

Konventionelle Verfahren zur Anbindung der Verbindungsstücke an die Ringankerenden sehen vor, dass der bereits konsolidierte Ringanker mit Bohrungen versehen wird, durch die dann die metallischen Verbindungselemente, die die Verbindungsstücke an den Enden des Ringankers halten, geführt werden. Nachteilig an diesem Vorgehen ist, dass bei der Bohrung die Faserstruktur im Ringanker beschädigt wird. Darüber hinaus müssen die metallischen Bolzen, Niete bzw. Schrauben, die das Verbindungsstück halten sollen, gegen direkten Kontakt mit den offenen Enden der Kohlefaserverstärkungsmaterialien geschützt werden. Andernfalls könnte elektrochemische Korrosion die Bolzen oder Schrauben schwächen bzw. zerstören.

Es stellt sich somit die Aufgabe, ein Verfahren vorzuschlagen, mit dem die Verbindungsstücke an den Enden des Ringankers fixiert werden können, das die genannten Nachteile vermeidet.

Erfindungsgemäß wird die Aufgabe mit einem Verfahren nach Anspruch 1 gelöst. Vorteilhafte Vorgehensweisen sind in den rückbezogenen Unteransprüchen offenbart.

Vorzugsweise wird der Ringanker gemeinsam mit der äußeren Kabinenschale gefertigt. Dabei wird ein Ringanker-Formteil, dass bereits die Faserverstärkungsstruktur des Ringankers aufweist, in eine Teilform jener Form eingelegt, in der die äußere Kabinenschale gefertigt wird. Optional kann die Teilform durch einen entsprechend befrästen Kern gebildet werden. Anschließend werden die Faserlagen des Ringankers und der äußeren Kabinenschale gemeinsam mit Matrixmaterial getränkt und dieses anschließend konsolidiert (das Matrixmaterial ausgehärtet). Es ist auch möglich, das Ringanker-Formteil bereits mit Matrixmaterial zu tränken und anschließend in die Teilform einzulegen bzw. auf eine Trägerkonstruktion, die die Teilform aufweist, aufzulegen, auf die dann die weiteren Faserlagen der äußeren Schale, ebenfalls als vorgetränkte Faserlagen (bspw. als Prepregs) aufgelegt werden. Auch hier wird anschließend konsolidiert.

Eine weitere bevorzugte Ausführungsform sieht vor, die äußere Kabinenschale und den Ringanker als unabhängige Bauteile zu fertigen und den konsolidierten Ringanker in die konsolidierte äußere Kabinenschale einzubringen und dort zu fixieren, vorzugsweise einzukleben. Die Teilform befindet sich dann außerhab der Form, in der die äußere Kabinenschale gefertigt wird.

In noch einer weiteren bevorzugten Ausführungsform wird die Faserverstärkungsstruktur des Ringankers in der Form lagenweise aus Faserverstärkungslagen aufgebaut.

Der Ringanker besteht aus mehreren Lagen von Verstärkungsfasern. Dabei kommen sowohl Lagen unidirektionaler Fasern (UD-Lagen) als auch geflochtene oder bidirektional gelegte Lagen zum Einsatz. Die unterschiedlichen Lagen wechseln vorteilhaft einander ab.

Insbesondere ist es vorteilhaft, einen Kern mit UD-Fasern, mit einer geflochtenen oder gewickelten äußeren Hülle, die die Form des Ringankers bestimmt, zu umgeben. Vorteilhaft können auch Gelege aus Rovings oder Prepregs als äußere Hülle genutzt werden. Vorzugsweise sind die einzelnen Lagen des Ringankers miteinander verbunden. Dies kann durch Vernähen, Stricken oder Klemmen passieren. Auch die Verwendung von Kunststoffverbindern ist möglich.

Um das nachteilige Durchbohren des konsolidierten Faserverbundmaterials an den Enden des konsolidierten Ringankers zu vermeiden, werden erfindungsgemäß die metallischen Verbindungselemente im trockenen oder im nassen (mit Matrixmaterial getränkten) unkonsolidierten Zustand des Matrixmaterials an den vorgesehenen Stellen vorrichtungsgebunden oder frei positioniert und durch die Verstärkungsfaserstruktur hindurchgeführt, wobei die Fasern verdrängt, jedoch nicht beschädigt werden.

In einer ersten bevorzugten Ausführungsform ist das Verbindungsstück einteilig gestaltet, so dass es das Ende des Ringankers vollständig umgibt und durch metallische Verbindungselemente gehalten wird, die die Enden des Ringankers vollständig durchdringen.

In einer weiteren bevorzugten Ausführungsform ist das Verbindungsstück mehrteilig, besonders bevorzugt zweiteilig ausgeführt. Insbesondere bevorzugt ist eine zweiteilige Ausführung, bei der das Ende des Ringankers zwischen zwei halbschalenförmig ausgebildeten Teilen des Verbindungsstücks gehalten wird. Die beiden Teile des Verbindungsstücks sind dabei einander gegenüberliegend an einem Ende des Ringankers angeordnet.

In einer dritten bevorzugten Ausführungsform ist das Verbindungsstück ein- oder mehrteilig ausgeführt, zeichnet sich jedoch dadurch aus, dass es das Ende des Ringankers nicht vollständig umschließt. Die metallischen Verbindungselemente sind auf einer Seite in Unterlegscheiben oder Unterlegstücken auf der Oberfläche des Ringankermaterials und auf der anderen Seite durch das Material des Verbindungsstückes gelagert.

In einer ersten bevorzugten Verfahrensweise sieht das erfindungsgemäße Verfahren vor, das Verstärkungsfasermaterial in der angestrebten äußeren Form in trockenem oder im unkonsolidierten matrixmaterialgetränkten Zustand bereit zu stellen. Dies erfolgt, indem der Ringanker (als Abfolge von Lagen) in eine Teilform eingelegt wird und die Verbindungsstücke auf den Ringanker aufgelegt und anschließend die metallischen Verbindungselemente durch die Verstärkungsfaserlagen hindurchgedrängt werden. Alternativ können zuerst die Verbindungsstücke in die Teilform eingelegt und anschließend der unkonsolidierte Ringanker eingebracht werden. Um eine sowohl absolute als auch relative Positionierung sicher zu stellen, können die Verbindungselemente optional auf einer Trägerplatte vorpositioniert werden. Beim Durchdringen der Faserlagen erfolgt vorteilhaft keine Beschädigung von Fasern. Anschließend kann das Verstärkungsfasermaterial der äußeren Gehäuseschale über dem Ringanker aufgebracht und ein gemeinsames Tränken mit Matrixmaterial bzw., wenn alle Fasermaterialien bereits getränkt sind, das Konsolidieren erfolgen. Nach dem Konsolidieren ist der Ringanker, ausschließlich über das Matrixmaterial, stoffschlüssig mit der äußeren Gehäuseschale verbunden. Abschließend können äußere Gehäuseschale und Ringanker in einem Stück aus der Form entnommen werden.

In einer zweiten bevorzugten Verfahrensweise wird das Verstärkungsfasermaterial des Ringankers in einer eigenen Teilform in trockenem oder im unkonsolidierten matrixmaterialgetränkten Zustand bereitgestellt. Anschließend werden die metallischen Verbindungselemente durch die Verstärkungsfaserlagen hindurchgedrängt und die Verbindungsstücke installiert. Auch dies erfolgt vorteilhaft ohne Beschädigung der Fasern des Verstärkungsfasermaterials. Danach kann das Verstärkungsfasermaterial, falls es im trockenen Zustand bereitgestellt wurde, mit Matrixmaterial getränkt werden. Anschließend kann in beiden Fällen (trocken oder getränkt bereitgestelltes Verstärkungsfasermaterial) der vorbereitete Ringanker entnommen und in die Form zur Herstellung der äußeren Schale eingelegt werden. Anschließend erfolgt die Weiterverarbeitung wie in der ersten bevorzugten Verfahrensweise.

Eine dritte bevorzugte Verfahrensweise sieht vor, entsprechend der zweiten bevorzugten Verfahrensweise vorzugehen, jedoch das getränkte Verstärkungsfasermaterial nach dem Anbringen der Verbindungsstücke teilzukonsolidieren und erst danach in die Form zur Herstellung der äußeren Schale zu überführen.

Die metallischen Verbindungselemente können als einzelne Bauteile oder an einem Teil des Verbindungsstücks fixiert (bspw. aufgeschweißt, geklebt) bereitgestellt werden.

Bevorzugt weisen die Verbindungselemente als einzelne Bauteile einen Kopf und einen stabförmigen Körper auf, der einen geringeren Durchmesser als der Kopf besitzt. Die Verbindungselemente werden im Zuge des Verfahrens durch die dafür vorgesehenen Öffnungen der Verbindungsstücke und die Faserlagen hindurchgeführt. Nach dem Konsolidieren des Ringankers werden vorzugsweise Unterlegstücke (-scheiben) oder ein weiteres Teilstück der Verbindungsstücke auf das jeweilige konsolidierte Ende des Ringankers aufgebracht und dort fixiert. Dies erfolgt bspw. durch Verschrauben oder Vernieten der Enden der Verbindungsstücke. In jeder Ausführungsform durchdringen die Verbindungsstücke den Ringanker vollständig.

Versuche haben gezeigt, dass es problematisch sein kann, die Bolzen bzw. Verbindungsschrauben durch die Faserlagen hindurchzudrücken. Aus dem Stand der Technik ist es bekannt, in solchen Fällen einen Dorn zu verwenden, der durch seine spitze Form die Verdrängung der Fasern vornimmt, woraufhin die Verbindungselemente (Schrauben, Bolzen) leicht durch die einmal geschaffenen Öffnungen geführt werden können. Bei diesem Vorgehen ist der Dorn als getrennt ausgebildetes Werkzeug ausgeführt.

Ein derartiges Verfahren ist aus der DE 37 15 409 A1 bekannt. Nachteilig ist dabei, dass die Verfahrensdurchführung aufwendig ist, da zuerst die Dorne durch die Faserlagen hindurch gestoßen und anschließend die eigentlichen Krafteinleitungselemente eingeführt werden.

In einer besonders bevorzugten erfindungsgemäßen Verfahrensweise wird daher so vorgegangen, dass die Verbindungselemente (Schrauben, Bolzen) selbst als Dorne ausgebildet sind und daher nach dem erfolgreichen Durchdringen der Faserlagen nicht entfernt werden müssen. In einer einfachen Verfahrensweise sind dabei die Verbindungselemente an der Seite, die durch die Faserlagen dringt, zugespitzt ausgeführt.

Eine zweite, fortgeschrittene Ausführungsform sieht vor, dass die zugespitzte Ausführung der Verbindungselemente durch eine abnehmbare Spitze realisiert wird. Die abnehmbare Spitze kann dabei entweder auf einen Außengewindeabschnitt an dem Ende des Verbindungselementes, mit dem die Faserlagen durchdrungen werden, aufgeschraubt sein oder die abnehmbare Spitze ist in einer axialen Öffnung an dem Ende des Verbindungselementes, mit dem die Faserlagen durchdrungen werden, eingesetzt oder eingeschraubt.

Eine vorteilhafte Weiterbildung sieht vor, dass die Spitze, falls eine Schraubverbindung zu dem Verbindungselement vorliegt, an mindestens zwei gegenüberliegenden Seiten abgeflacht ist, um das Ansetzen eines Schraubenschlüssels, bevorzugt eines Maulschlüssels, zur Montage bzw. Demontage zu ermöglichen. Der Übergang von der Abflachung zum weiteren Verlauf der abnehmbaren Spitze in Richtung des Verbindungselementes ist bevorzugt gerundet ausgeführt, damit die Fasern beim Durchdringen der Lagen auch in diesem Bereich abgleiten können.

In einer bevorzugten Vorgehensweise sollen die Gewindegänge von Schrauben geschützt werden, d.h. es soll vermieden werden, dass sich die Gewindegänge mit Harz füllen. Dazu werden sowohl die Gewindegänge als auch die den Dorn ausbildenden Hülsen mit geeigneten Trennmitteln versehen.

Vorzugsweise wird beim Durchstoßen der Faserlagen die Oberfläche des Verbindungselementes mit einem reibungsreduzierenden Mittel beschichtet, dass weiterhin bevorzugt auch die Wirkung eines Trennmittels ausübt.

Bevorzugt werden die Verbindungselemente beim Durchdringen der Faserlagen, insbesondere bei Kohlefasern, mit einer Oberflächenbeschichtung versehen, die einen direkten, elektrisch leitfähigen Kontakt zwischen dem Material der Verbindungselemente und den Kohlenstoffasern unterbindet oder zumindest stark reduziert. Das reibungsreduzierende Mittel und die Oberflächenbeschichtung können identisch sein, falls das gewählte Material die notwendigen Eigenschaften aufweist. Derartige Materialien sind aus dem Stand der Technik bekannt.

Verbindungselemente, die mit einem Außengewinde versehen sind, können mit diesem nachteilig beim Durchdringen an Fasern hängen bleiben und deren Bruch verursachen. In einer fortgeschrittenen Ausführungsform, weisen daher die Verbindungselemente eine Umhüllung auf. Diese ist vorzugsweise in der Art einer an den Verbindungselementen enganliegenden Röhre ausgeführt. Bei mit einem Außengewinde versehenen Verbindungselementen kann diese Umhüllung auch aufgeschraubt sein. In einer bevorzugten Verfahrensweise wird diese Umhüllung nach dem Durchdringen der Faserlagen abgezogen bzw. abgeschraubt und entnommen, so dass sie nicht im Ringanker verbleibt.

Eine weitere bevorzugte Ausführungsform sieht vor, dass die Umhüllung im Ringanker verbleibt und im Zuge der Tränkung mit Matrixmaterial und anschließender Konsolidierung in die Matrix mit eingebunden wird. Freiliegende bzw. später zu nutzende Teile von sowohl Innenals auch Außengewinden sind bevorzugt gegen eine Benetzung mit Matrixmaterial zu schützen.

Bevorzugt besteht die schützende Umhüllung aus einem Kunststoffmaterial, besonders bevorzugt aus demselben Material, das als Matrixmaterial zum Einsatz kommt. Es ist aber auch möglich, einen geeigneten Werkstoff einzusetzen, der nicht chemisch durch das Matrixmaterial angegriffen wird.

Eine vorteilhafte Weiterbildung der Umhüllung sieht vor, dass diese durchbrochen ist, um das Eindringen von Matrixmaterial bis direkt zum Verbindungselement zu ermöglichen. Diese Durchbrüche sind bevorzugt als axial verlaufende längliche Öffnungen über annähernd die gesamte Länge der Umhüllung oder auch als kreisförmig oder ellipsenförmig (vorzugsweise große Halbachse der Ellipse parallel zur Längsachse des Verbindungselementes) ausgeführt. Vorzugsweise sind dabei jedoch Kanten zu vermeiden (bzw. abzurunden), an denen die Fasern des Faserverstärkungsmaterials hängen bleiben könnten.

In einer weiteren vorteilhaften Weiterentwicklung bilden die den Dorn ausbildenden Hülsen (Umhüllungen) selbst später im Sinne eines eingebetteten Innengewindes nutzbare Funktionselemente.

Auch eine Beschichtung aus Matrixmaterial auf den Verbindungselementen ist möglich. Diese ist dann auf den Abschnitt des Verbindungselementes beschränkt, der im montierten Zustand innerhalb des Ringankers verläuft.

Nach dem Einbringen der Verbindungselemente und dem Konsolidieren des Matrixmaterials des Ringankers (dies erfolgt optional gemeinsam mit dem Konsolidieren der äußeren Hülle) werden die Verbindungselemente fixiert. Dies erfolgt bevorzugt, indem diese auf der Gegenseite verschraubt oder vernietet werden.

Die Konstruktion der Kabine und die Auslegung der Systeme, insbesondere des Ringankers, erfolgen bevorzugt mit computergestützten Simulationsverfahren, die es gestatten, die Auslegung entsprechend den gültigen Vorschriften vorzunehmen. Die Simulationsverfahren und computergestützten Gestaltungswerkzeuge sind dem Fachmann bekannt.

Die folgenden Figuren erläutern beispielhaft die Befestigung von Verbindungsstücken an den Enden eines Ringankers für das Kopfmodul eines Schienenfahrzeugs.

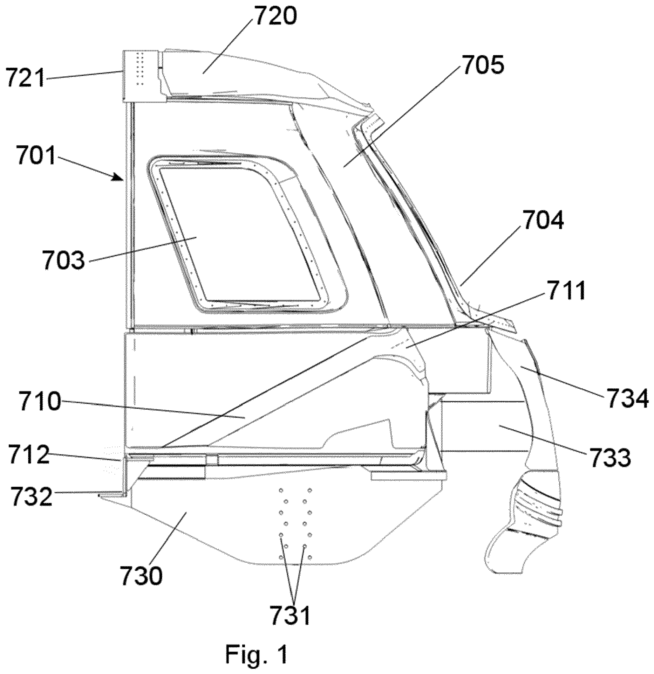

**Fig. 1** zeigt schematisch eine Seitenansicht der Kabine ohne die äußere Schale. Auch die Mittelpufferkupplung wurde aus Übersichtlichkeitsgründen weggelassen. Die innere Schale 701 ist zweiteilig ausgeführt. Die Teilung erfolgt in horizontaler Ebene oberhalb der Brüstungsverstärkung 711. Der obere Teil der inneren Schale 701 weist die Öffnung 704 für die Frontscheibe und die Seitenscheiben 703 auf. Die Fensteröffnungen sind durch die A-Säule 705 voneinander getrennt. Oberhalb des oberen Teils der inneren Schale ist der Ringanker 720 dargestellt. Dieser wird über das Verbindungsstück 721 lösbar an den oberen Längsträgern des nachfolgenden Wagenteils (nicht dargestellt) befestigt.
   In den unteren Teil der inneren Schale sind die Brüstungsverstärkung 711 und die UD-Gurte 710 integriert, die die Kraft von der Brüstungsverstärkung 711 auf die Einleitpunkte 712 in die unteren Längsträger des nachfolgenden Wagenteils übertragen.
   Unterhalb des unteren Teils der inneren Schale verläuft das untere Crash-Durchleitungselement 730. An der Frontseite der Kabine ist die Platte 734 dargestellt. Dieser nachgeordnet ist die Crash-Box 733. Im Crash-Falle erfolgt der Aufprall auf der Platte 734, die die Kraft an die Crash-Box 733 weitergibt und dort weitestgehend abbaut. Verbliebene Stoßenergie wird in das untere Crash-Durchleitungselement 730 weitergeleitet und dort am Befestigungspunkt 732 in die Untergestellstütze des nachfolgenden Wagenteils übergeben. Im horizontalen Teil des unteren Crash-Durchleitungselementes 730 sind die Öffnungen 731 zur Befestigung der Mittelpufferkupplung erkennbar.

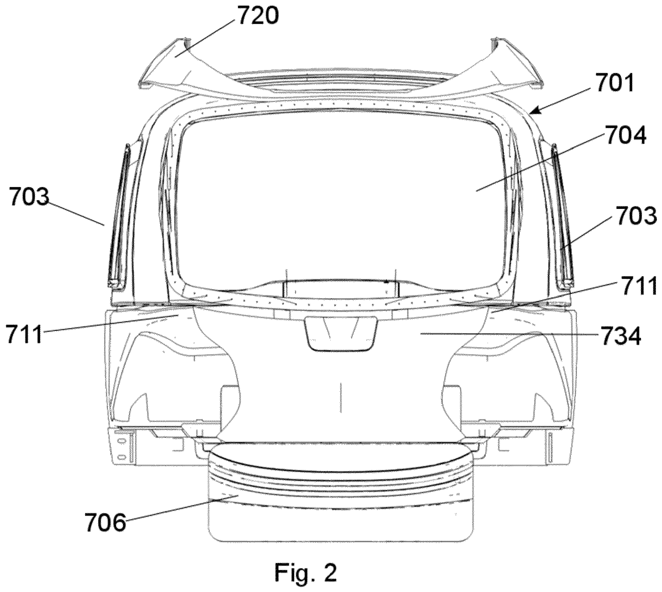

**Fig. 2** zeigt schematisch die Frontansicht der Kabine ohne die äußere Schale. Gegenüber der Seitenansicht aus Fig. 1 ist zusätzlich die Abdeckklappe der Mittelpufferkupplung mit dem Bezugszeichen 706 versehen, die sich in eine korrespondierende Öffnung der äußeren Schale einfügt.

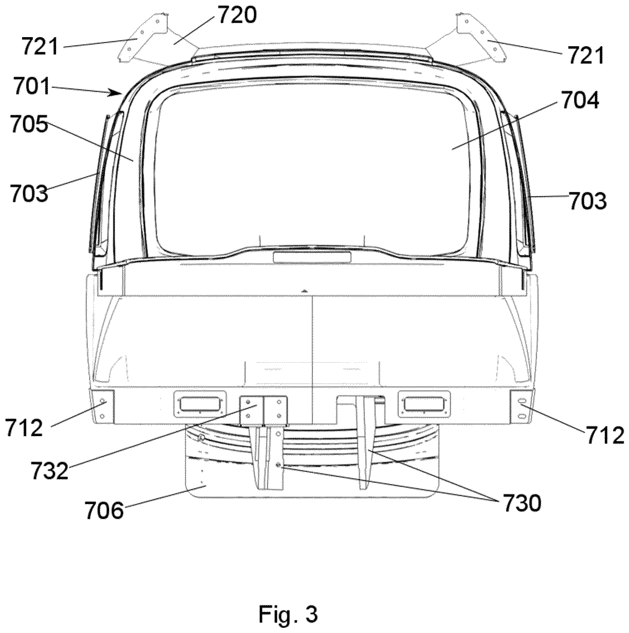

**Fig. 3** zeigt schematisch die Rückansicht der inneren Schale der Kabine. Es handelt sich um die Seite, mit der die Kabine am nachfolgenden Wagenteil montiert ist. Die Montage erfolgt bevorzugt an den beiden oberen Längsträgern des nachfolgenden Wagenteils mittels der Verbindungsstücke 721 des oberen Ringankers, mittels der Befestigungselemente an den Einleitpunkten 712 der UD-Gurte von der Brüstungsverstärkung und mittels der Befestigungsvorrichtung 712 (nur eine dargestellt, eine zweite ist symmetrisch auf der rechten Seite angeordnet) des unteren Crash-Elements an der Untergestellstütze.

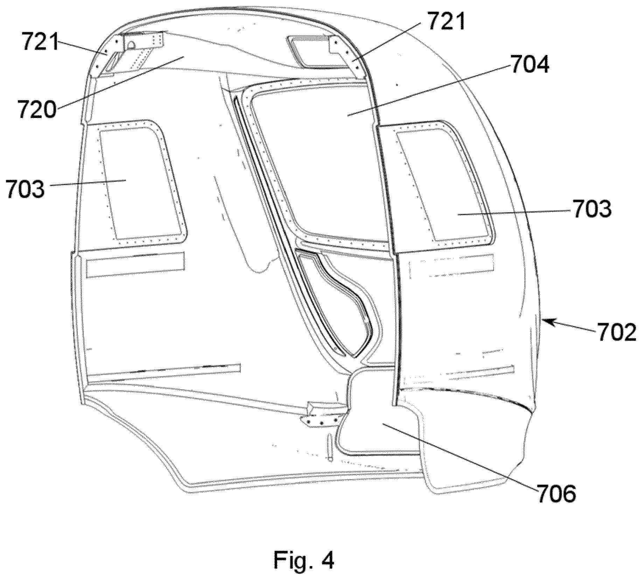

**Fig. 4** zeigt schematisch in einer dreidimensionalen Ansicht die äußere Schale 702. Insbesondere ist zu erkennen, wie sich der obere Ringanker 720 mit seinen Verbindungsstücken 721 in die äußere Schale 702 einfügt. Auch die Öffnung für die Abdeckklappe 706 der Mittelpufferkupplung ist dargestellt.

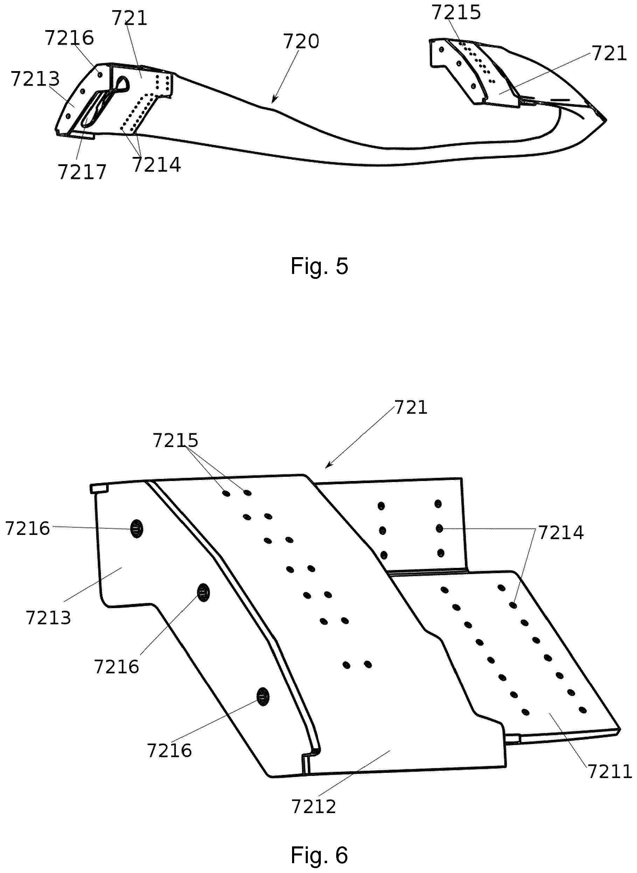

**Fig. 5** zeigt schematisch den Aufbau des Ringankers 720 mit den beiden Verbindungsstücken 721. Die Verbindungsstücke 721 sind über Verbindungselemente durch die Öffnungen 7214 mit dem Ringanker verbunden. Sie weisen die Montageöffnungen 7217 auf, durch die der Ringanker über die Verbindungsstücke und das Frontteilstück 7213 mit dem nachfolgenden Wagenteil verbunden wird. Dazu werden durch die Öffnungen 7216 Verbindungselemente, insbesondere Schrauben, geführt, die durch die Montageöffnung 7217 festgezogen werden können. Die Öffnungen 7215 erlauben optional eine Verschraubung mit der äußeren Schale.
**Fig. 6** zeigt schematisch eine Ausführungsform des Verbindungsstücks 721. Dieses Verbindungsstück weist ein unteres Teilstück 7211, ein oberes Teilstück 7212 und das Frontteilstück 7213 auf. Die Teilstücke bestehen aus Stahl und sind mittels Schweißverbindungen untereinander fixiert.

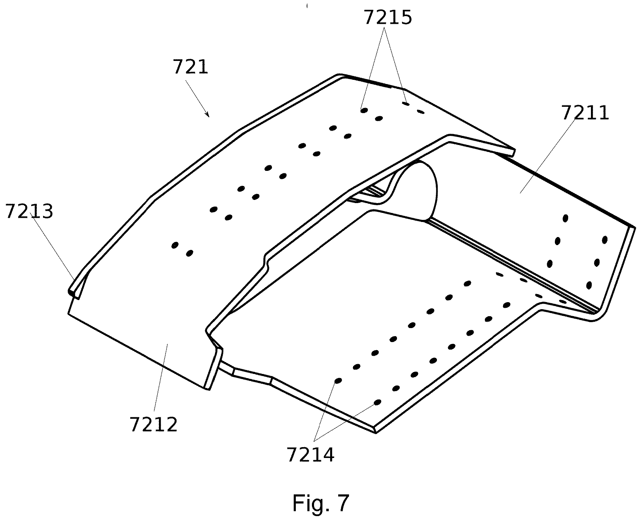

**Fig. 7** zeigt schematisch das Verbindungsstück nach Fig. 6 aus einer anderen Perspektive.

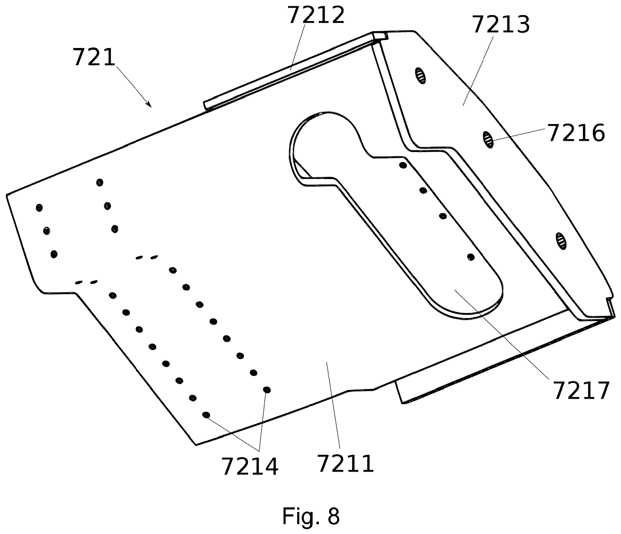

**Fig. 8** zeigt schematisch das Verbindungsstück nach Fig. 6 von der Unterseite.

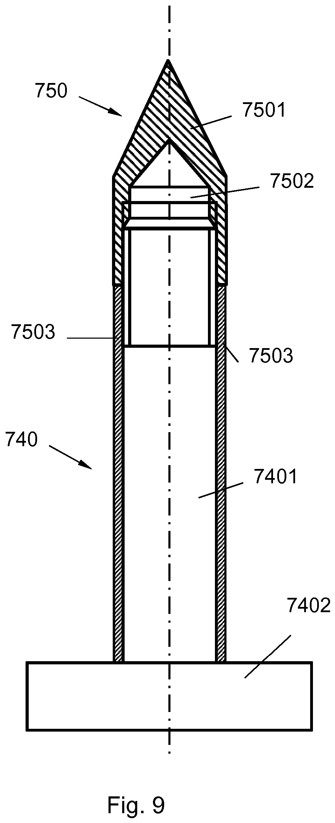

**Fig. 9** zeigt schematisch eine Ausführungsform für ein Verbindungselement 740 mit Schnitt durch die aufgeschraubte Spitze 751 und die Umhüllung 7503. Das Verbindungselement hat Schraubenform und besteht aus einem Kopfteil 7402 und einem Körper 7401 mit Gewinde. Es weist in dem Teil, der nach der Montage mit dem Matrixmaterial in Verbindung kommt, kein Gewinde auf. Dort ist die Umhüllung 7503 angeordnet, die einen direkten Kontakt des metallischen Verbindungselementes mit der Verstärkungsfaserstruktur verhindert. Die Umhüllung verbleibt im fertig konsolidierten und montierten Ringanker. Die Spitze 751 weist einen zugespitzten Teil 7501 auf, der auf dem Gewinde 7502 aufgeschraubt ist. Nach dem Konsolidieren des Faserverbundmaterials wird die Spitze abgeschraubt und die Mutter zur Fixierung des Verbindungselementes, optional mit Unterlegung einer Unterlegscheibe oder eines weiteren Teilstücks des Verbindungsstücks, auf dem Gewinde 7502 aufgeschraubt.

### Bezugszeichenliste

- 701: Innere Schale
- 702: Äußere Schale
- 703: Seitenfensteröffnung
- 704: Frontfensteröffnung
- 705: A-Säule
- 706: Abdeckklappe der Mittelpufferkupplung
- 707: Inneneinbauten
- 710: UD-Gurt der Brüstungsverstärkung
- 711: Brüstungsverstärkung
- 712: Einleitpunkt der Kräfte von der Brüstungsverstärkung in den unteren Längsträger des nachfolgenden Wagens
- 720: Ringanker
- 721: Verbindungsstück
- 7211: Unteres Teilstück
- 7212: Oberes Teilstück
- 7213: Frontteilstück
- 7214: Öffnungen
- 7215: Öffnungen
- 7216: Öffnungen
- 7217: Montageöffnungen
- 730: Unteres Crash-Durchleitungselement
- 7301: Abschnitt des Crash-Durchleitungselement von der Crash-Box zum horizontalen Teil
- 7302: Horizontaler Teil
- 7303: Abschnitt des Crash-Durchleitungselement vom horizontalen Teil zum Befestigungselement an der Untergestellstütze
- 731: Bohrungen zur Befestigung der Mittelpufferkupplung
- 732: Befestigungsvorrichtung des unteren Crash-Elements an der Untergestellstütze
- 733: Crash-Box
- 734: Platte
- 740: Verbindungsbolzen zur Befestigung des Verbindungsstücks am Ringanker
- 7401: Bolzenkörper
- 7402: Bolzenkopf
- 750: Spitze zur Unterstützung der Durchdringung des Faserverstärkungsmaterials
- 7501: zugespitzter Teil
- 7502: Gewinde
- 7503: Umhüllung des Verbindungsbolzens

## Patentansprüche

1. Verfahren zur Verbindung eines Verbindungsstücks an einem U-förmigen Ringanker (720) für ein Kopfmodul für Schienenfahrzeuge, wobei das Kopfmodul überwiegend aus faserverstärktem Kunststoffmaterial besteht und eine äußere Schale (702) aufweist und der Ringanker (720) aus faserverstärktem Kunststoffmaterial besteht und als Versteifung im Dachbereich der äußeren Schale; (702) angeordnet ist, aufweisend mindestens die folgenden Schritte:
a) Bereitstellen einer Form für die äußere Schale (702) mit einer Teilform für den Ringanker (720)
b) Bereitstellen einer trockenen oder matrixmaterialgetränkten, unkonsolidierten Faserverstärkungsstruktur des Ringankers und Einlegen in die Teilform,
c) Bereitstellen eines Verbindungsstückes (721) für jedes Ende des U-förmigen Ringankers,
d) Bereitstellen von Verbindungselementen (740),
e) Hindurchführen der Verbindungselemente durch die Faserverstärkungsstruktur des Ringankers oder lagenweiser Aufbau der Faserverstärkungsstruktur, wobei jeder Lage unter Durchdringung durch die Verbindungselemente aufgebracht wird,
f) Hindurchführen der Verbindungselemente durch die dafür vorgesehenen Öffnungen (7217) der Verbindungsstücke (721),
g) Aufbau der äußeren Schale (702) aus Faserverstärkungsmaterial und Tränkung des Faserverstärkungsmaterials von äußerer Schale (702) und Ringanker (720) mit Matrixmaterial,
h) gemeinsame Konsolidierung von Ringanker (720) und äußerer Schale (702),
i) Fixierung der Verbindungselemente derart, dass diese auf beiden Seiten des Ringankers, unter Einschluss der Verbindungsstücke (721) fixiert sind.

2. Verfahren nach Anspruch 1, **dadurch gekennzeichnet, dass** Schritt b) durch den Aufbau der trockenen oder matrixmaterialgetränkten Faserverstärkungsstruktur des Ringankers in der Teilform realisiert wird.

3. Verfahren nach Anspruch 1, **dadurch gekennzeichnet, dass** die Teilform durch einen geeignet befrästen Kern dargestellt wird.

4. Verfahren nach Anspruch 1, **dadurch gekennzeichnet, dass** Schritt b) durch den Aufbau der trockenen oder matrixmaterialgetränkten Faserverstärkungsstruktur des Ringankers in einer Form außerhalb der Form für die äußere Schale erfolgt.

5. Verfahren nach einem der vorhergehenden Ansprüche, **dadurch gekennzeichnet, dass** die Verbindungsstücke vor Schritt b) in die Teilform eingelegt werden.

6. Verfahren nach einem der vorhergehenden Ansprüche, **dadurch gekennzeichnet, dass** Schritt c) und Schritt d) gemeinsam erfolgen, indem die Verbindungselemente als Teil der Verbindungsstücke bereitgestellt werden.

7. Verfahren nach einem der vorhergehenden Ansprüche, **dadurch gekennzeichnet, dass** Schritt d) das Anbringen einer Spitze auf jedem Verbindungselement zur Unterstützung der Durchdringung der Faserlagen einschließt.

8. Verfahren nach Anspruch 7, **dadurch gekennzeichnet, dass** nach Schritt h) die Spitze von jedem Verbindungselement entfernt wird.

9. Verfahren nach einem der vorhergehenden Ansprüche, **dadurch gekennzeichnet, dass** Schritt d) das Anbringen einer Umhüllung in dem Bereich des Verbindungselementes, der mit dem Material des Ringankers in Berührung kommt, beinhaltet.

10. Verfahren nach Anspruch 9, **dadurch gekennzeichnet, dass** die Umhüllung nach dem Entfernen des Verbindungselementes als Innengewinde im Ringanker verbleibt.

11. Verfahren nach einem der vorhergehenden Ansprüche, **dadurch gekennzeichnet, dass** in Schritt i) ein Teilstück des Verbindungsstücks mit fixiert wird.

## Claims

1. Method for connecting a connection piece to a U-shaped ring beam (720) for a head module for rail vehicles, wherein the head module consists predominantly of fibre-reinforced plastic material and has an outer shell (702), and the ring beam (720) consists of fibre-reinforced plastic material and is arranged as stiffener in the roof area of the outer shell (702), having at least the following steps:
a) preparing a mould for the outer shell (702) with a section mould for the ring beam (720),
b) preparing a fibre-reinforcing structure of the ring beam which structure is dry or impregnated with matrix material and unconsolidated, and placing it in the section mould,
c) preparing a connection piece (721) for each end of the U-shaped ring beam,
d) preparing connecting elements (740),
e) feeding the connecting elements through the fibre-reinforcing structure of the ring beam or construction in plies of the fibre-reinforcing structure, wherein each ply is deposited while being penetrated by the connecting elements,
f) feeding the connecting elements through the openings (7217) of the connection pieces (721) provided for this purpose,
g) constructing the outer shell (702) from fibre-reinforcing material and impregnating the fibre-reinforcing material of the outer shell (702) and the ring beam (720) with matrix material,
h) jointly consolidating the ring beam (720) and the outer shell (702),
i) fixing the connecting elements such that they are fixed on both sides of the ring beam, including the connection pieces (721).

2. Method according to claim 1, **characterized in that** step b) is realized by the construction of the fibre-reinforcing structure, which is dry or impregnated with matrix material, of the ring beam in the section mould.

3. Method according to claim 1, **characterized in that** the section mould is represented by a suitably milled core.

4. Method according to claim 1, **characterized in that** step b) is effected by the construction of the fibre-reinforcing structure, which is dry or impregnated with matrix material, of the ring beam in a mould outside of the mould for the outer shell.

5. Method according to one of the preceding claims, **characterized in that** the connection pieces are placed in the section mould before step b).

6. Method according to one of the preceding claims, **characterized in that** step c) and step d) are effected jointly **in that** the connecting elements are prepared as part of the connection pieces.

7. Method according to one of the preceding claims, **characterized in that** step d) includes the fitting of a tip on each connecting element to support the penetration of the fibre plies.

8. Method according to claim 7, **characterized in that** after step h), the tip is removed from each connecting element.

9. Method according to one of the preceding claims, **characterized in that** step d) includes the fitting of a casing **in that** area of the connecting element which comes into contact with the material of the ring beam.

10. Method according to claim 9, **characterized in that** the casing remains as internal thread in the ring beam after the connecting element is removed.

11. Method according to one of the preceding claims, **characterized in that** a section of the connection piece is also fixed in step i).

## Revendications

1. Procédé de raccordement d'une pièce de raccordement à une ancre annulaire en forme de U (720) pour un module de tête pour des véhicules sur rails, le module de tête étant réalisé en majeure partie en une matière plastique renforcée par des fibres et présentant une coquille extérieure (702), et l'ancre annulaire (720) étant réalisée en une matière plastique renforcée par des fibres et étant agencée en tant que renforcement dans la zone de recouvrement de la coquille extérieure (702), comportant au moins les étapes suivantes :
a) fournissement d'un moule pour la coquille extérieure (702) avec un élément de moule pour l'ancre annulaire (720),
b) fournissement d'une structure de renforcement par fibres sèche ou imprégnée de matière matricielle et non-consolidée de l'ancre annulaire, et agencement dans l'élément de moule,
c) fournissement d'une pièce de raccordement (721) pour chaque extrémité de l'ancre annulaire en forme de U,
d) fournissement d'éléments de raccordement (740),
e) passage des éléments de raccordement à travers la structure de renforcement par fibres de l'ancre annulaire, ou réalisation de la structure de renforcement par fibres en couches, chaque couche étant appliquée lors du passage des éléments de raccordement,
f) passage des éléments de raccordement à travers les orifices (7217) des pièces de raccordement (721) prévus à cet effet,
g) réalisation de la coquille extérieure (702) à partir de matière de renforcement par fibres et imprégnation de la matière de renforcement par fibres de la coquille extérieure (702) et de l'ancre annulaire (720) avec de la matière matricielle,
h) consolidation commune de l'ancre annulaire (720) et de la coquille extérieure (702),
i) fixation des éléments de raccordement de telle sorte que ces derniers sont fixés des deux côtés de l'ancre annulaire, incluant les pièces de raccordement (721).

2. Procédé selon la revendication 1, **caractérisé en ce que** l'étape b) est mise en œuvre par la réalisation de la structure de renforcement par fibres sèche ou imprégnée de matière matricielle de l'ancre annulaire dans l'élément de moule.

3. Procédé selon la revendication, **caractérisé en ce que** l'élément de moule est représenté par un noyau fraisé de manière appropriée.

4. Procédé selon la revendication 1, **caractérisé en ce que** l'étape b) est effectuée par la réalisation de la structure de renforcement par fibres sèche ou imprégnée de matière matricielle de l'ancre annulaire dans un moule à l'extérieur du moule pour la coquille extérieure.

5. Procédé selon l'une des revendications précédentes, **caractérisé en ce que** les pièces de raccordement sont placées dans l'élément de moule avant l'étape b).

6. Procédé selon l'une des revendications précédentes, **caractérisé en ce que** l'étape c) et l'étape d) sont réalisées conjointement en fournissant les éléments de raccordement en tant que partie des pièces de raccordement.

7. Procédé selon l'une des revendications précédentes, **caractérisé en ce que** l'étape d) comprend l'agencement d'une pointe sur chaque élément de raccordement pour soutenir la pénétration des couches de fibres.

8. Procédé selon la revendication 7, **caractérisé en ce que** la pointe est retirée de chaque élément de raccordement après l'étape h).

9. Procédé selon l'une des revendications précédentes, **caractérisé en ce que** l'étape d) comprend l'agencement d'une enveloppe dans la zone de l'élément de raccordement qui parvient en contact avec la matière de l'ancre annulaire.

10. Procédé selon la revendication 9, **caractérisé en ce que** l'enveloppe reste en tant que taraudage dans l'ancre annulaire après le retrait de l'élément de raccordement.

11. Procédé selon l'une des revendications précédentes, **caractérisé en ce qu'**une partie de la pièce de raccordement est également fixée à l'étape i).
